# EUROPEAN PATENT APPLICATION

(11) **EP 1 772 984 A1**
(43) Date of publication of application: **11.04.2007**
(21) Application number: 06120387.3
(22) Date of filing: 08.09.2006
(51) Int. Cl.: H04L 1/00, H03M 13/45

(54) **Method and apparatus for controlling error using reserved bits**

(30) Priority: 10.10.2005 KR 20050094892
(71) Applicant: Samsung Electronics Co., Ltd., Suwon-si, Gyeonggi-Do (KR)
(72) Inventor: Kim, Hae-sik, Gyeonggi-do (KR); Kong, Jun-jin, Gyeonggi-do (KR); Roh, Jae-ho, Seoul (KR)
(74) Representative: Weigelt, Udo

(57) **Abstract**

An apparatus for controlling an error using reserved bits including a mask indicator, a pre-decoder and a decoder. The mask indicator is operable to provide mask data. The pre-decoder is operable to mask reserved bits of received data using the mask data. The decoder is operable to decode the pre-decoded reserved bits of received data.

## Description

### BACKGROUND OF THE INVENTION

### Field of the Invention

The present invention relates to methods and apparatus for controlling an error using reserved bits. Particularly, techniques for controlling an error using reserved bits by which the reserved bits of received data is pre-decoded and then decoded through masking prior to decoding of the received data in an ultra wide band (UWB) modem is provided so as to improve an error correction capability.

### Description of the Related Art

Recently emerging UWB wireless technology enables high speed data transmission using several hundreds of MHz. Orthogonal frequency-division multiplexing (OFDM) is one of the techniques for realizing such UWB communications. The OFDM uses sub-carners of several tens or several hundreds of types of frequencies so as to compress a larger amount of information in each symbol period compared to a digital data transmission system and then transmit the information. Thus, the OFDM uses a smaller number of symbols compared to other digital data transmission systems so as to transmit the same number of bits per second.

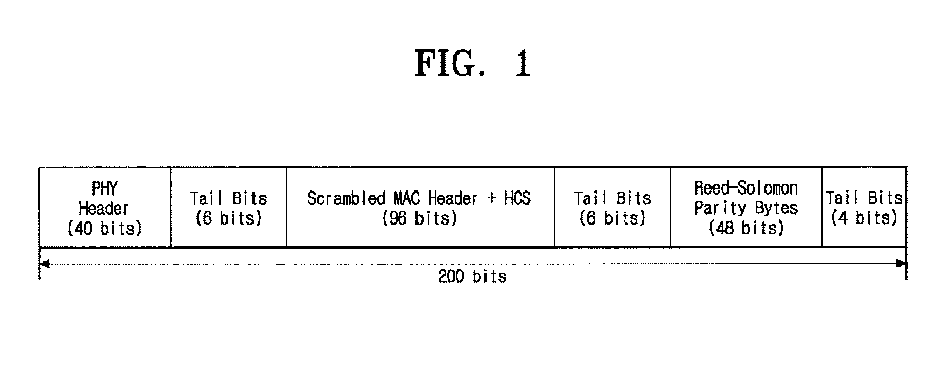

FIG. 1 is a view illustrating a packet structure of a physical layer convergence procedure (PLCP) header transmitted and/or received according to a multi-band (MB)-OFDM in an UWB communication. As shown in FIG. 1, the PLCP header includes a physical (PHY) header (40 bits), tail bits (6 bits), a scrambled media access control (MAC) header and a header check sequence (HCS) (96 bits), tail bits (6 bits), Reed-Solomon parity bytes (48 bits), and tail bits (4 bits).

Accordingly, in a case where an UWB receiver receives the PLCP header packet, the UWB receiver performs an error check through the HCS to check whether errors occur in the PHY header and the MAC header. Here, if the error occurs in the PHY header, the error is corrected using a cyclic redundancy check (CRC) or the like.

However, a modem of the UWB receiver requires a stronger error correction capability. Thus, a technique for improving the error correction capability of the modem of the UWB receiver is required to check an error in a received data packet.

### SUMMARY OF THE INVENTION

Accordingly, the present general inventive concept has been made to solve some of the above-mentioned problems. An aspect of the present general inventive concept is to provide a method and an apparatus for controlling an error using reserved bits by which the reserved bits of received data is pre-decoded and then decoded through masking prior to decoding of the received data in UWB modem so as to improve an error correction capability.

According to an aspect of the present invention, there is provided an apparatus for controlling an error, including a mask indicator a pre-decoder and a decoder. The mask indicator is operable to provide mask data. The pre-decoder is operable to mask reserved bits of received data using the mask data. The decoder is operable to decode the pre-decoded received data.

According to another aspect of the present invention, there is provided an apparatus for controlling an error, including a selector, a mask indicator and a pre-decoder. The selector is operable to select whether or not to pre-decoded received data according to channel state information. The mask indicator is operable to provide mask data. The pre-decoder is operable to mask reserved bits of the received data using the mask data

According to another aspect of the present invention, there is provided an apparatus for controlling an error, including a buffer, a pre-decoder and a decoder. The buffer is operable to temporarily store received data. The mask indicator is operable to provide mask data. The pre-decoder is operable to mask the received data stored in the buffer using the mask data..

According to another aspect of the present invention, there is provided a method for controlling an error using reserved bits, including providing mask data necessary for masking input data. The reserved bits of the input data are masked using the mask data. The masked data is then decoded.

According to another aspect of the present invention, there is provided a method for controlling an error using reserved bits, including selecting whether or not to pre-decode input data according to channel state information. Mask data necessary for pre-decoding the input data is provided. The reserved bits of the input data are masked using the mask data.

According to another aspect of the present invention, there is provided a method for controlling an error using reserved bits, including temporarily storing input data in a buffer. Mask data necessary for pre-decoding the input data is provided. The input data stored in the buffer is masked using the mask data. The masked data is then decoded.

The mask data may be data of "0" or "1." The channel state information may include at least one of an RSSI (received signal strength indicator), an LQI (link quality indicator), a bit error rate (BER) of Viterbi decoder through the re-encoding scheme, a branch metric (BM) of Viterbi decoder, and an SNR (signal-to-noise ratio).

### BRIEF DESCRIPTION OF THE DRAWINGS

The above aspects and features of the present invention will be more apparent by describing certain embodiments of the present invention with reference to the accompanying drawings, in which:

FIG. 1 is a view illustrating a packet structure of a PLCP header transmitted and/or received in an UWB communication according to an MB-OFDM method;

FIG. 2A is a schematic block diagram of an apparatus for controlling an error using reserved bits according to an exemplary embodiment of the present invention;

FIG. 2B is a view illustrating a packet structure of a PHY header;

FIG. 3 is a schematic block diagram of an apparatus for controlling an error using reserved bits according to another exemplary embodiment of the present invention;

FIG. 4 is a schematic block diagram of an apparatus for controlling an error using reserved bits according to another exemplary embodiment of the present invention;

FIG. 5 is a graph illustrating results of pre-decoding.

### DETAILED DESCRIPTION OF THE EXEMPLARY EMBODIMENTS

Certain embodiments of the present invention will be described in greater detail with reference to the accompanying drawings.

In the following description, same drawing reference numerals are used for the same elements even in different drawings. The matters defined in the description such as a detailed construction and elements are nothing but the ones provided to assist in a comprehensive understanding of the invention. Thus, it is apparent that the present invention can be carried out without those defined matters. Also, well-known functions or constructions are not described in detail since they would obscure the invention in unnecessary detail.

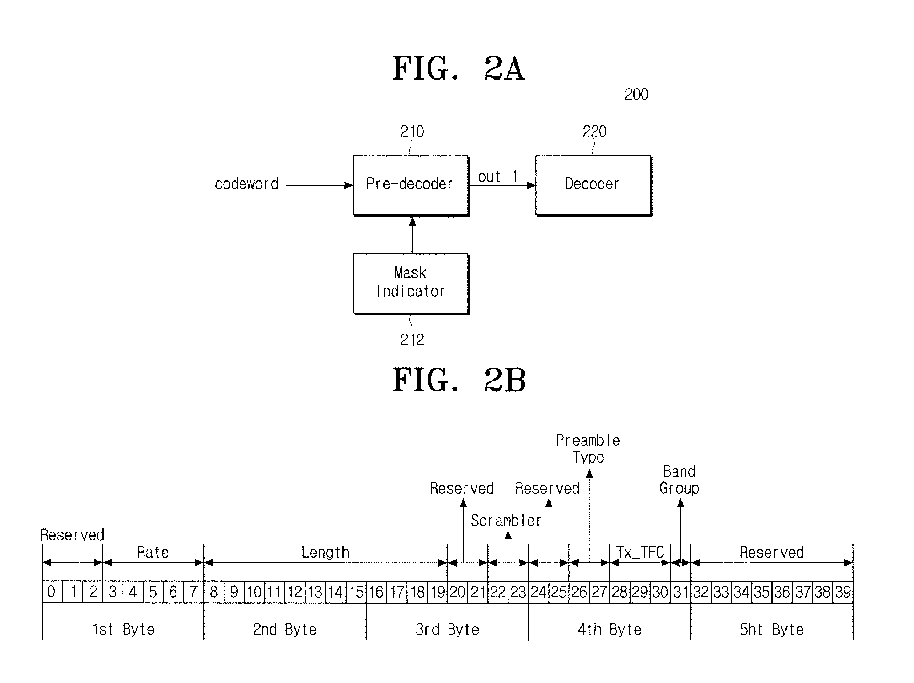

FIG. 2A is a schematic block diagram of an apparatus for controlling an error using reserved bits according to an embodiment of the present invention. Referring to FIG. 2A, an error controlling apparatus 200 according to the present embodiment includes a pre-decoder 210, a mask indicator 212, and a decoder 220.

Here, an UWB receiver including the error controlling apparatus 200 according to the present embodiment transforms an UWB signal received through an antenna into an OFDM signal and then transforms the OFDM signal into a codeword stream through Fast Fourier Transform (FFT) and constellation reverse mapping.

Thus, in the above-described structure, the pre-decoder 210 masks reserved bits of a PHY header of the codeword as mask data of "0" or "1."

The mask indicator 212 provides the mask data of "0" or "1" to the pre-decoder 210 so as to perform the masking.

The decoder 220 decodes the pre-decoded codeword stream.

FIG. 2B is a view illustrating a packet structure of a PHY header. As shown in FIG. 2B, the PHY header includes transmission rate information indicating a transmission rate of an MAC frame necessary for recovering a signal in a PHY layer and length information indicating a length of a payload. The PHY header also includes scrambler information, preamble type information, transmission time frequency code (TFC) information, band group information, and reserved bit information.

Here, all bytes of the PHY header include reserved bits except a second byte. Also, reserved bits of first, third, fourth, and fifth bytes are all known. Thus, the pre-decoder 210 masks the known reserved bits using S/W and/or H/W Methods.

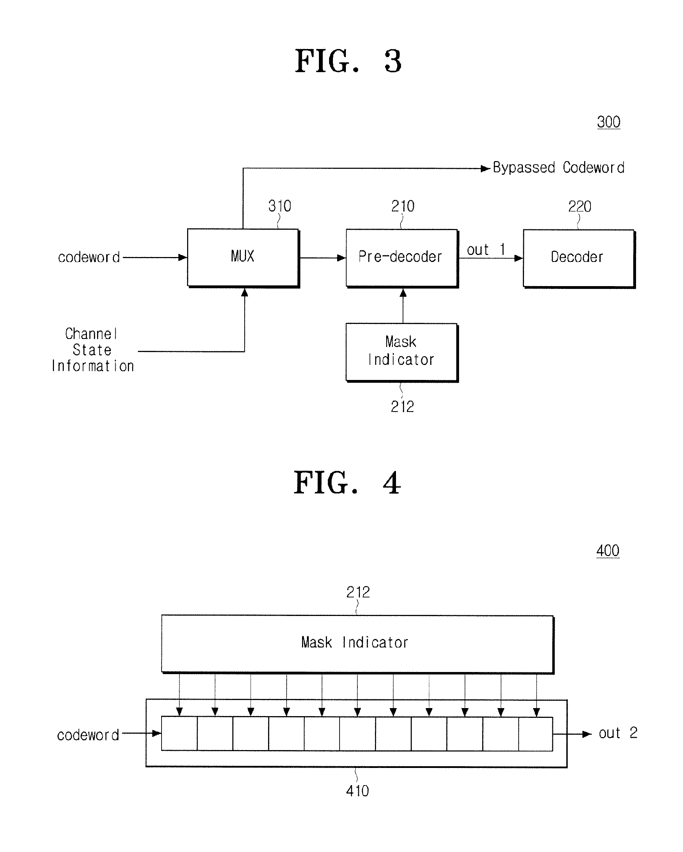

FIG. 3 is a schematic block diagram of an apparatus for controlling an error using reserved bits according to another embodiment of the present invention. Referring to FIG. 3, an error controlling apparatus 300 according to the present embodiment further includes a selector 310 besides the pre-decoder 210, the mask indicator 212, and the decoder 220 shown in FIG. 2. Here, the pre-decoder 210, the mask indicator 212, and the decoder 220 have been described with reference to FIG. 2 and thus will not be described herein.

In other words, the error controlling apparatus 300 has the same structure as the error controlling apparatus 200 shown in FIG. 2 except for the selector 310.

Referring to FIG. 3, the selector 310 selects whether or not to pre-decode a codeword stream according to channel state information. For example, the selector 310 may be realized as a multiplexer. In other words, the selector 310 checks a channel state of the codeword stream using a received signal strength indicator (RSSI), a link quality indicator (LQI), a bit error rate (BER) of Viterbi decoder through the re-encoding scheme, a branch metric (BM) of Viterbi decoder, a signal-to-noise ratio (SNR), and the like. If the channel state is good, the selector 310 does not pre-decode the codeword stream. If the channel state is not good, the selector 310 transmits the codeword stream to the pre-decoder 210 so as to pre-decode the codeword stream.

FIG. 4 is a schematic block diagram of an apparatus for controlling an error using reserved bits according to another embodiment of the present invention. Referring to FIG. 4, an error controlling apparatus 400 further includes a buffer 410 besides the pre-decoder 210, the mask indicator 212, and the decoder 220. The pre-decoder 210, the mask indicator 220, and the decoder 220 have been described with reference to FIG. 2 and thus will not be described herein.

Referring to FIG. 4, the buffer 410 temporarily stores an applied codeword stream.

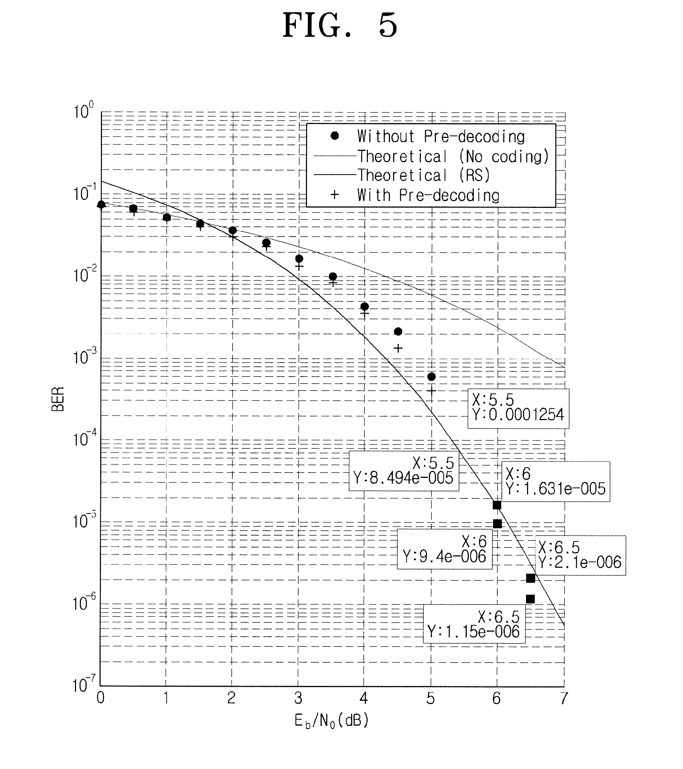

Thus, the mask indicator 212 provides mask data corresponding to all codeword data so as to mask all the codeword data stored in the buffer 410. As a result, the pre-decoder 210 pre-decodes the codeword stream stored in the buffer 410. As shown in FIG. 5, a gain of about 0.1dB can be obtained in 1e-5 area according to the result of pre-decoding.

In an error controlling apparatus of the present invention having the above-described structure, the selector 310 by-passes an input codeword stream or transmits the input codeword stream to the pre-decoder 210 based on channel state information. The pre-decoder 210 masks reserved bits of a PHY header of the codeword stream based on mask data provided by the mask indicator 212 so as to pre-decode the reserved bits.

Table 1 below shows examples of pre-decoding values when the reserved bits are "0."

**[Table 1]**

| Input Data | Mask Data | Out1 |
|---|---|---|
| 0 | 0 | 0 |
| 0 | 1 | 0 |
| 1 | 0 | 0 |
| 1 | 1 | 1 |

Table 2 below shows examples of pre-decoding values when the reserved bits are "1."

**[Table 2]**

| Input Data | Mask Data | Out1 |
|---|---|---|
| 0 | 0 | 0 |
| 0 | 1 | 1 |
| 1 | 0 | 1 |
| 1 | 1 | 1 |

Also, the pre-decoded codeword stream is decoded by the decoder 220. Thus, a codeword stream is pre-decoded prior to being decoded to reduce an occurrence of an error so as to improve an error correction capability of an UWB receiver during decoding.

As described above, according to the present invention, data can be pre-decoded prior to be decoded to reduce an occurrence of an error so as to improve an error correction capability of an UWB receiver.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An apparatus for controlling an error, comprising:
a mask indicator operable to provide mask data;
a pre-decoder operable to mask reserved bits of received data using the mask data;
and
a decoder operable to decode the pre-decoded received data.

2. The apparatus of claim 1, wherein the mask data is "0" or "1."

3. An apparatus for controlling an error, comprising:
a selector operable to select whether or not to pre-decoded received data according to channel state information;
a mask indicator operable to provide mask data; and
a pre-decoder operable to mask reserved bits of the received data using the mask data.

4. The apparatus of claim 3, wherein the mask data is "0" or "1."

5. The apparatus of claim 3, wherein the channel state information comprises at least one of a received signal strength indicator, a link quality indicator, a bit error rate of Viterbi decoder through a re-encoding scheme, a branch metric f Viterbi decoder, and asignal-to-noise ratio.

6. An apparatus for controlling an error, comprising:
a buffer operable to temporarily store received data;
a mask indicator operable to provide mask data; and
a pre-decoder operable to mask the received data stored in the buffer using the mask data.

7. The apparatus of claim 6, wherein the mask data is "0" or "1."

8. A method for controlling an error using reserved bits, comprising:
providing mask data necessary for masking input data;
masking reserved bits of the input data using the mask data; and
decoding the masked data.

9. The method of claim 8, wherein the mask data is "0" or "1."

10. A method for controlling an error using reserved bits, comprising:
selecting whether to pre-decode input data according to channel state information; providing mask data necessary for pre-decoding the input data; and
masking reserved bits of the input data using the mask data.

11. The method of claim 10, wherein the mask data is "0" or "1."

12. The method of claim 10, wherein the channel state information comprises at least one of a received signal strength indicator, a link quality indicator, a bit error rate of Viterbi decoder through a re-encoding scheme, a branch metric of Viterbi decoder, and a signal-to-noise ratio.

13. A method for controlling an error using reserved bits, comprising:
temporarily storing input data in a buffer;
providing mask data necessary for pre-decoding the input data;
masking the input data stored in the buffer using the mask data; and
decoding the masked data.

14. The method of claim 13, wherein the mask data is data of "0" or "1."
